Europäisches Patentamt

(19) European Patent Office

Office européen des brevets

(11) Publication number: **0 453 241 A1**

(12) **EUROPEAN PATENT APPLICATION**

(21) Application number: 91303386.6

(22) Date of filing: 16.04.91

(51) Int. Cl.⁵: **B65G 27/32**

(30) Priority: 18.04.90 GB 9008687

(43) Date of publication of application:
23.10.91 Bulletin 91/43

(84) Designated Contracting States:
AT BE CH DE DK ES FR GB GR IT LI NL SE

(71) Applicant: **WRIGHT MACHINERY COMPANY LIMITED**
**Eskdale Road**
**Uxbridge, UB8 2SH (GB)**

(72) Inventor: **Mount, Michael John**
**c/o Wright Machinery Company Limited**
**Eskdale Road, Uxbridge UB8 2SH (GB)**

(74) Representative: **Boon, Graham Anthony et al**
**Elkington and Fife Prospect House 8**
**Pembroke Road**
**Sevenoaks, Kent TN13 1XR (GB)**

(54) **Drive and monitoring system for a vibratory conveyor.**

(57)    A drive and monitoring system is provided for a vibratory conveyor, which is preferably operable at its natural frequency. The system comprises a power supply (14) for supplying an electrical current to drive the conveyor, adjusting means (6-13) for automatically adjusting the current to maintain the amplitude of vibration of the conveyor at a constant level, and a sensing device including a monitoring circuit (15) for sensing the current and for deriving therefrom a signal representative of the load on the conveyor.

EP 0 453 241 A1

Fig.1.

This invention relates to a drive and monitoring system for a vibratory conveyor.

Vibratory conveyors are generally used industrially to move fragile, small or lightweight articles from one point to another. The conveyor generally consists of a tray and a base with a resilient means connecting the two. A drive means generates relative vibration between the base and tray, and the vibration of the base is usually minimised by making its weight much greater than that of the tray.

In most conveyors the frequency of excitation of the drive is different from the natural frequency of the conveyor. Most commonly the conveyors are driven mechanically using a motor-driven eccentric, hydraulically using a pump or electrically using an electromagnet. So that the conveyor remains under control, it is excited at other than its natural frequency.

The conveyor to which the present invention is preferably applied is excited at its natural frequency. The drive operates electromagnetically, the control system supplying pulses of direct current to energise the drive. The position of the tray is monitored by a sensor and hence the control system receives a signal and can then transmit the pulses of current at the correct time to maintain the natural frequency. A further consequence of the presence of the sensor is that the amplitude of vibration of the tray is monitored and can be maintained by automatic adjustment of the amplitude of the current pulses.

The losses in such a conveyor driven at natural frequency are small. They are divided into electrical and mechanical losses. The electrical loss is made up of the resistive losses in the controller and electromagnets which depends on the amplitude of the current pulses. The mechanical loss is due partly to factors such as windage, i.e. air resistance to motion of the tray, noise and warming of the resilient connections between the tray and base. However, there is another significant mechanical loss, which is due to the transport of product along the tray. This loss is directly proportional to the weight of the product. Since the amplitude is automatically maintained, the current increases as the weight of product increases.

It is often useful to know the weight of product on the conveyor. For a given amplitude of tray movement, the velocity of the product is known and so, with a knowledge of the weight, the throughput can be calculated. So, for example, if the conveyor is feeding a flavouring system, it is possible to control the amount of flavour applied to the product so that a consistent degree of flavouring is obtained.

The present invention is based on using the change in the amplitude of the drive current pulses mentioned above to measure the load on the conveyor. In the case of a conveyor driven at natural frequency, the mechanical loss due to weight of product, and thus the increase in current required to compensate for it, is a significant part of the total loss. Hence, the weight of the product can be measured directly in a natural frequency conveyor by monitoring the amplitude of the drive current pulses. With a forced frequency conveyor there is also a change in current required as the amount of product on the conveyor changes, but this is only small compared to the total current. Accordingly, it is more difficult, though it is not impossible, to measure the weight of the product on a forced frequency conveyor by monitoring the amplitude of the drive current pulses.

Thus, according to the present invention there is provided a drive and monitoring system for a vibratory conveyor, which comprises power supply means for supplying an electrical current to drive the conveyor, adjusting means for automatically adjusting the said current to maintain the amplitude of vibration of the conveyor at a constant level, and sensing means for sensing the said current and for deriving therefrom a signal representative of the load on the conveyor.

The invention further provides a vibratory conveyor having the aforesaid drive and monitoring system.

In the accompanying drawings:

Figure 1 is a side elevation of a conveyor to which the present invention may be applied;

Figure 2 is a block diagram showing the electrical circuit used in the embodiment of Figure 1;

Figure 3 is a detail of the circuit of Figure 2, showing an embodiment of the power circuit thereof; and

Figure 4 is another detail of the circuit of Figure 3 showing an embodiment of the circuit for generating the monitoring signal.

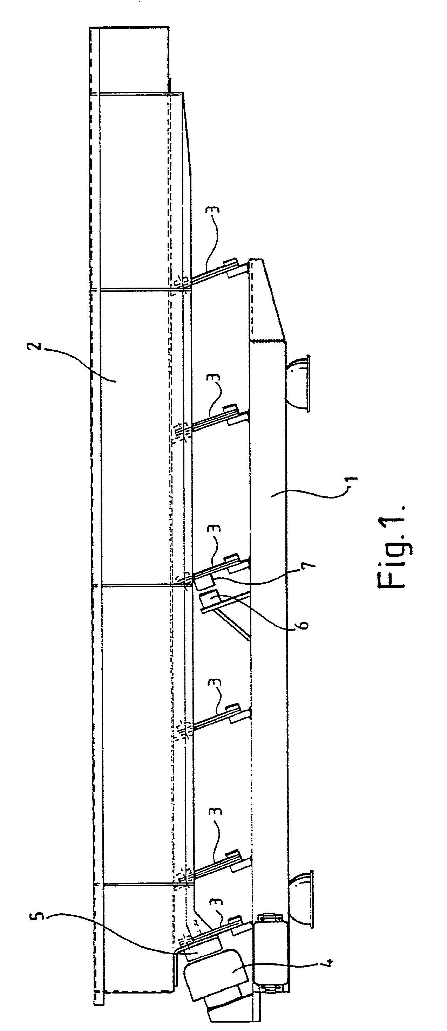

Figure 1 shows a vibratory conveyor which comprises a base 1 and a tray 2 connected to the base 1 by a plurality of leaf springs 3 each of which is designed to flex about an axis perpendicular to the plane of the paper. An electromagnet 4 is connected to the base 1, and an armature 5 is connected to the underside of the tray and arranged opposite the electromagnet 4. The electromagnet and armature are so arranged that when the electromagnet is energized the armature, and thus the tray, to which the armature is attached, are attracted towards the electromagnet.

A series of current pulses are supplied to the electromagnet 4 to cause the armature 5 to be intermittently attracted to the electromagnet, and thus the tray is caused to vibrate back and forth in a longitudinal direction. This causes product on the tray to be transported along it in the known manner of a vibratory conveyor.

The amplitude of vibration of the tray varies depending on the amount of product on the tray. The more product there is, the smaller the amplitude of vibration. A sensing device is provided to detect this effect. This comprises a sensor coil 6 fixed to the base, and a permanent magnet 7 fixed to the tray by a bracket (not shown). The magnet and coil are arranged so that movement of the magnet as the tray vibrates causes a current to be generated in the coil. The output of the coil is thus an alternating current signal, the amplitude of which represents the amplitude of vibration of the tray. This signal can then be fed to a control circuit for controlling the current pulses supplied to the electromagnet 4, so that if the amplitude of the signal from the sensor coil 6 falls the amplitude of the current pulses supplied to the electromagnet 4 is increased, and if the amplitude of the signal from the sensor coil rises the amplitude of the current pulses supplied to the electromagnet 4 is decreased. In this way the amplitude of vibration of the tray can be maintained substantially constant.

It will be seen that, as a result of maintaining the amplitude of vibration of the tray substantially constant, the drive current supplied to the electromagnet is a measure of the amount of product on the tray. The greater the amount of product, the greater the drive current. Thus, by measuring the drive current one can, in effect, measure the amount of product on the tray. This is done by a monitoring circuit described in more detail below.

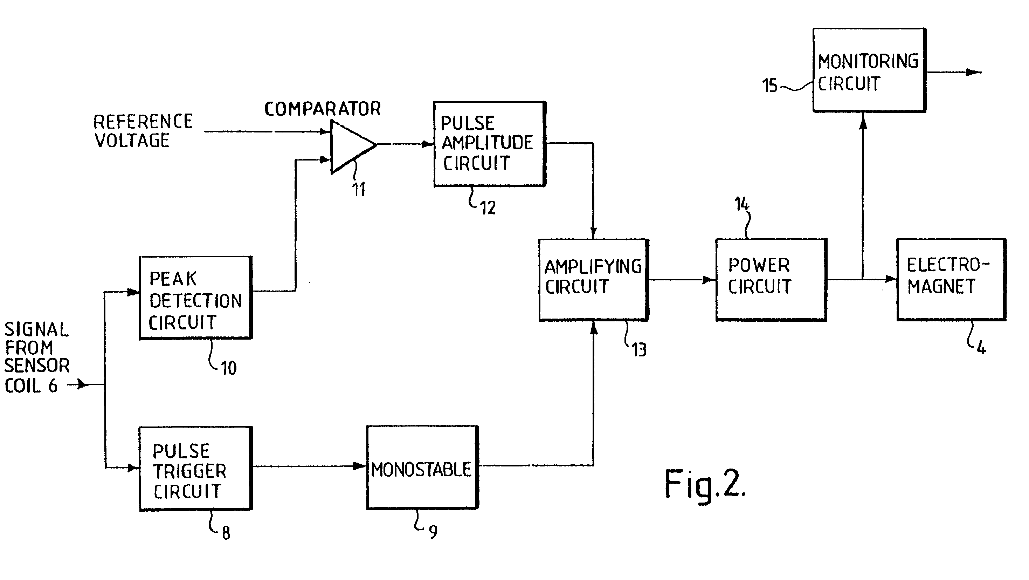

Figure 2 shows in block diagram form the electrical circuit used in the embodiment of Figure 1. The signal from the sensor coil 6 is sinusoidal and its frequency and amplitude are used to control the pulses of current supplied to the electromagnet. As the armature starts to move towards the electromagnet, the signal from the sensor reverses its direction. This reversal is detected by a trigger circuit 8 which triggers a monostable 9, whose pulse width defines the width of the current pulse to be supplied to the electromagnet.

The amplitude of the signal from the sensor coil 6 is proportional to the amplitude of vibration of the tray. The sensor signal is fed through a peak detection circuit 10 and this peak value is compared in a comparator 11 with a reference voltage. The reference voltage can be supplied from a potentiometer, which is under operator control. The output of the comparator 11 is fed to a pulse amplitude defining circuit 12 where a signal is generated to define the amplitude of the current pulse to be supplied to the electromagnet.

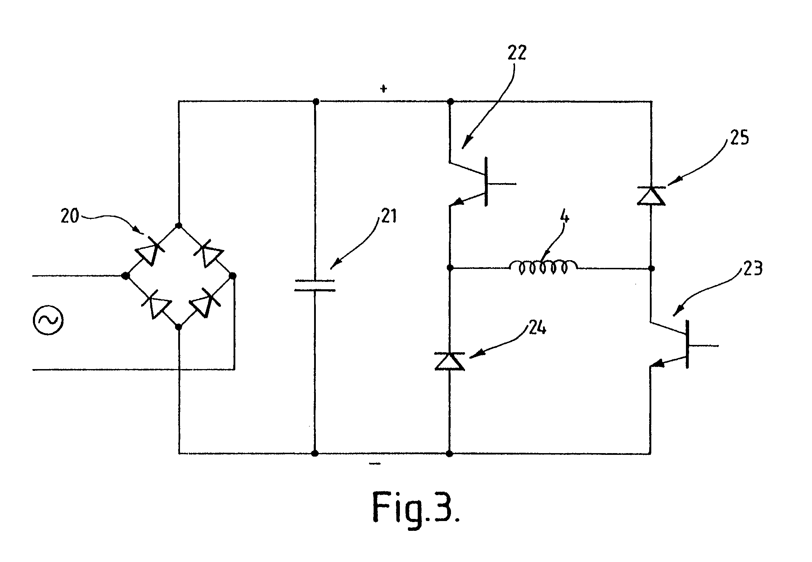

The outputs of the monostable 9 and amplitude pulse circuit 12 constitute logic signals which are supplied to an amplifying circuit 13 which in turn is connected to a power circuit 14. An example of the power circuit is shown in Figure 3. An A.C. mains supply is rectified by a rectifier 20 and smoothed with a capacitor 21 to generate a DC link voltage. The pulses of current thus produced are controlled using power transistors 22, 23 which connect the link voltage across the electromagnet 4 when the transistors are switched on. Two freewheel diodes 24, 25 provide an alternative path for the load current when the transistors are switched off.

The logic signals from the monostable 9 and amplitude pulse circuit 12 are supplied to the amplifying circuit 13, which generates sufficient current to supply the bases of the power transistors 22, 23. The amplifier generates two signals, one to the base of each of the transistors. At the start of the current pulse, both transistors are switched on. When the current in the electromagnet has risen to a level sufficient to maintain the conveyor amplitude, the top transistor 22 is switched off. This point is defined by the pulse amplitude circuit 12. Thereafter, the current freewheels round the loop defined by the electromagnet 4, the lower transistor 23 and the lower freewheel diode 24. At the end of the current pulse, the lower transistor 23 switches off. This point is defined by the monostable circuit 9. Hence, the starting point of the pulse of current to the electromagnet and the amplitude of the pulse of current are under direct control of the sensor signal.

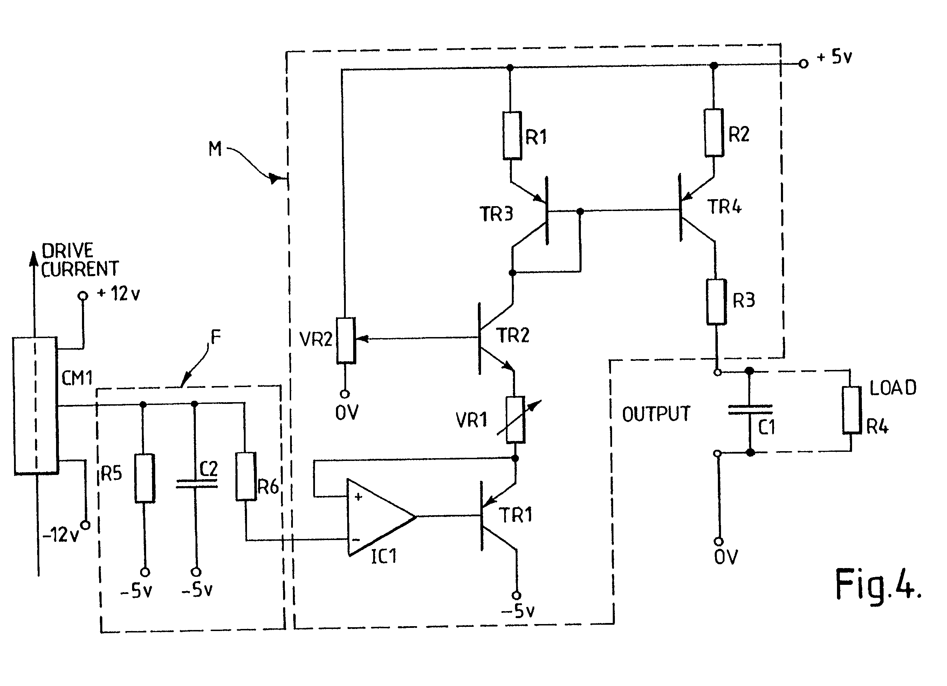

The output of the power circuit is fed to the electromagnet 4 via the primary of a D.C. current transformer, the secondary of which provides an input signal to a monitoring circuit 15. Details of the monitoring circuit are shown in Figure 4.

The purpose of the monitoring circuit shown in Figure 4 is to generate a current through a load R4 which is directly proportional to the current supplied to the electromagnetic conveyor drive. A suitable standard for the output signal is a current in the range 4 to 20mA which can then be supplied to a remote intelligence such as a computer or programmable logic controller.

As already mentioned drive current is fed to the primary of a D.C. current transformer, the secondary of which provides an input signal to the monitoring circuit. The use of the transformer, which is denoted as CM1 in Figure 4, ensures that the monitoring circuit is isolated from the drive to the electromagnets. The output of the transformer, which is proportional to the drive current, is fed via a filter circuit F comprising resistors R5 and R6 and capacitor C2, to an operational amplifier IC1 forming part of a so-called current mirror circuit M. The circuit M, which further comprises transistors TR1 to TR4 and resistors R1 to R3, produces an output current which mirrors the input voltage fed thereto from the filter circuit F.

Potentiometers VR1 and VR2 are used to set the maximum and minimum current. So with the tray empty, VR2 is adjusted to obtain 4mA output and with the tray full of product VR1 is adjusted to obtain 20mA output. In the absence of capacitor C1, the output current signal would contain a large component at the frequency of operation of the drive. C1 smooths out the unwanted component so that only the signal proportional to the weight of product on the tray remains. The magnitude needed for C1 depends on the load resistance R4, i.e. the resistance of the remote intelligence carrying out the monitoring.

## Claims

1. A drive and monitoring system for a vibratory conveyor, which comprises power supply means for supplying an electrical current to drive the conveyor, adjusting means for automatically adjusting the said current to maintain the amplitude of vibration of the conveyor at a constant level, and sensing means for sensing the said current and for deriving therefrom a signal representative of the load on the conveyor.

2. A system according to claim 1, wherein the power supply means is operative to supply to the conveyor current pulses having a given width, frequency and amplitude, and the adjusting means is operative to vary the amplitude of the pulses to maintain the amplitude of vibration of the conveyor at a constant level.

3. A system according to claim 1 or 2, wherein the sensing means comprises a transformer having a primary, through which current to drive the conveyor flows, and a secondary to which is connected a monitoring circuit for deriving said signal.

4. A system according to claim 3, wherein the monitoring circuit comprises a filter for smoothing out a component in the current therefrom at the frequency of the drive pulses.

5. A system according to any preceding claim, wherein the said signal is a current in the range of approximately 4 to 20mA.

6. A vibratory conveyor comprising a drive and monitoring system according to any preceding claim.

7. A conveyor according to claim 6, wherein the drive operates at the natural frequency of the conveyor.

Fig.1.

Fig.2.

Fig.3.

EP 0 453 241 A1

Fig.4.

EP 0 453 241 A1

European Patent
Office

**EUROPEAN SEARCH REPORT**

Application Number

EP 91 30 3386

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 602 058 (B. PROSS) * Claims 2,4; fig. * | 1,2 | B 65 G 27/32 |
| A | | 3,6,7 | |
| | ---- | | |
| X | US-A-4 331 263 (G.J. BROWN) * Column 4, line 4 - column 5, line 18; fig. * | 1,2,3 | |
| A | | 4,6,7 | |
| | ---- | | |
| X | GB-A-2 030 731 (NATIONAL RESEARCH DEVELOPMENT CORP.) * Page 4, lines 3-103; fig.; claims 1,7,8 * | 1,2 | |
| A | | 3,6,7 | |
| | --- | | |
| X | US-A-4 216 416 (J.W. GRACE) * Whole document * | 1,2 | |
| A | | 3,6,7 | |
| | ----- | | |

TECHNICAL FIELDS
SEARCHED (Int. Cl.5)

G 65 G
G 05 D
B 06 B

The present search report has been drawn up for all claims

| Place of search | Date of completion of the search | Examiner |
|---|---|---|
| THE HAGUE | 15-07-1991 | VAN ROLLEGHEM F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)